# EUROPEAN PATENT SPECIFICATION

(11) **EP 2 840 273 B1**
(45) Date of publication and mention of the grant of the patent: **17.01.2018**
(21) Application number: 14176856.4
(22) Date of filing: 14.07.2014
(51) Int. Cl.: F16D 1/05, F16D 1/033

(54) **Coupling**
Kupplung
Accouplement

(30) Priority: 30.07.2013 GB 201313544
(43) Date of publication of application: 25.02.2015
(73) Proprietor: Rolls-Royce plc, London SW1E 6AT (GB)
(72) Inventor: Miller, Wayne, Bristol, BS32 4DZ (GB)
(74) Representative: Rolls-Royce plc

(56) References cited:
- EP-A1- 1 836 992
- EP-A1- 2 317 156
- WO-A1-2011/120510
- WO-A2-2009/052825
- DE-A1- 4 125 252
- FR-A1- 2 217 589
- FR-A1- 2 644 216
- GB-A- 2 059 014
- US-A1- 2012 076 533

## Description

### Field of the Invention

The present invention relates to a shaft coupling and particularly, but not exclusively, to a shaft coupling having a non-circular connection profile.

### Background to the Invention

A coupling is a device which generally acts to transfer the rotational movement of one rotating component to another component. There are many types of coupling available which may be selected depending on the particular application. For example, a coupling may comprise a simple arrangement of abutting flanges, which are connected by bolts.

More complex couplings may comprise splines which are effective for transmitting high torsional loads between components. For example, a Curvic® coupling has splines that are curved. However, the splines of such couplings are difficult and time consuming to manufacture which in turn makes the Curvic couplings expensive. Furthermore the complex form of these couplings makes their installation and use difficult and therefore less convenient for a user.

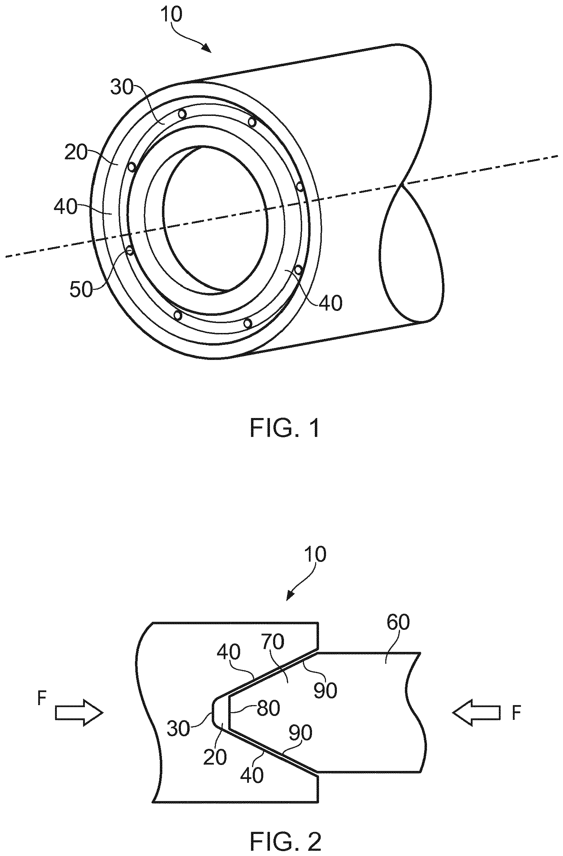

Conic couplings are known which comprise a female element having a recess which is of conical or frusto-conical cross-section. An example of such a female element is shown in Figure 1. The female element 10 comprises an annular recess 20 which has an end surface 30 and two angled side surfaces 40 disposed either side of the end surface 30 on radially inner and outer sides. A plurality of holes 50 are provided through the end surface 30 for receiving bolts or other fasteners. Figure 2 is a cross-section through the coupling of Figure 1 and shows the female element abutting against a male element 60. The male element 60 has an annular protrusion 70 with a corresponding cross-section formed by an end surface 80 and two angled side surfaces 90 disposed either side of the end surface 70 on radially inner and outer sides. The protrusion 70 of the male element 60 is received within the recess 20 of the female element 10, as shown in Figure 2.

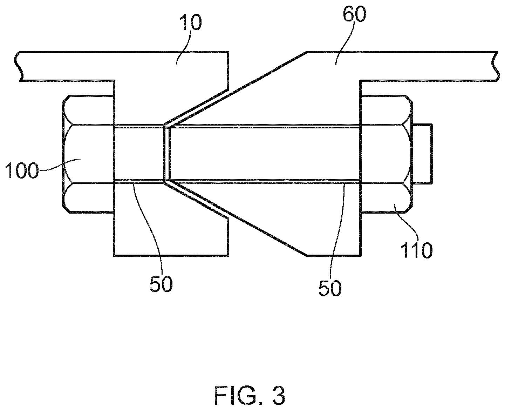

The side surfaces of the male and female elements abut one another and an axial load is applied, as indicated by arrows F, to clamp the two elements together. Rotation of the male or female element is transmitted to the other element by friction between the abutting side surfaces. As shown in Figure 3, the axial load may be placed on the male and female elements by bolting them together through the holes 50 in the female element and corresponding holes 50 in the male element. A suitable fastener such as a threaded bolt 100 and nut 110 may be used to create a compressive force between the male element 60 and the female element 10.

The torque capacity of the coupling is a function of the axial load, the cone angle (included angle between the side surfaces), the contact diameters and the coefficient of friction between the abutting surfaces.

In such a coupling, the rigidity and geometric accuracy affects the contact pressure distribution of the male and female elements. A non-uniform contact pressure distribution is particularly evident at the extremities of the contact.

US 2012/076533 A1 discloses a rotation driving force transmitting member disposed between a motor section and a main body of a photoreceptor drum. The rotation driving force transmitting member has a convex member which is provided on the photoreceptor drum side and includes a twisted convex portion with an elliptical cross-section, and a concave member which is provided on the motor section side and includes a twisted concave portion with an elliptical cross-section. The concave portion is fitted in the convex portion. The rotation driving force transmitting member transmits rotation driving force by the motor section to the photoreceptor drum via the convex member and the concave member in a state where the convex member is subjected to a drawing force toward the concave member side, due to rotation of the motor section in a state where the convex portion and the concave portion are fitted in each other.

WO 2009/052825 A2 discloses a wind turbine drive train including at least a rotor for transforming wind into rotation of a rotor hub, to provide a drive torque, a generator for transforming at least a part of the drive torque into electrical power, and at least one coupling for connecting a first drive train component to a second drive train component for transferring said drive torque between the components. The coupling comprises a first coupling part with a first coupling area, the first coupling area being connected with a second coupling area of a second coupling part, whereby the drive torque is transferred from one of the areas to the other of the areas during operation of said coupling. The first coupling area is provided with a first positive engaging structure engaging a corresponding second positive engaging structure of the second coupling area, and both the first and second positive engaging structures extend inwardly from positions near or at an outer periphery of the first and second coupling parts, respectively.

A problem with conventional conic couplings is that the load capacity of the joint is dependent upon the frictional contact between the conical surfaces. it is possible to improve the torque transfer capability of conventional conic couplings by adding features such as trunnions to the joint assembly to bear the torque load whilst the cones provide the joint alignment. However, such additions result in a joint assembly that is heavier, more complex and expensive to manufacture and therefore less convenient for a user.

The present invention provides an improved conic coupling which has an increased torque carrying capacity without a concomitant increase in weight and complexity.

### Statements of Invention

According to a first aspect of the present invention there is provided a coupling comprising:
a first element; and
a second element;
whereby the first element and the second element have a common axis, the first element having an annular projection arranged around the axis, the second element having an annular recess arranged around the axis, the annular projection being removably accommodated within the annular recess, and
wherein a radius of the annular projection varies circumferentially around the axis to thereby define a connection profile.

The coupling of the present invention provides for a non-circular joint profile. In the context of the invention, the connection profile defined by the radius of the annular projection is non-circular.

The non-circular connection profile means that torque is transmitted across the coupling by means of the contact between the annular projection and the annular recess. This mean that the limitation to the amount of torque that can be transmitted across the coupling is dictated by the mechanical strength of the first and second elements.

This in turn means that the weight of the coupling assembly may be reduced making the coupling of the present invention more attractive for use in a weight-critical application. In addition, the increased specific torque carrying capacity means that fewer bolts or other fasteners are required to secure the first elements of the coupling together.

Optionally, the connection profile is an ellipse.

An elliptical connection profile provides the coupling with the ability to be indexed by 180 degrees and can therefore be assembled in one of two orientations. This can be useful during the build process for the engine or other assembly incorporating the coupling, for example to improve the rotational balance of the engine.

Optionally, the connection profile is a square.

A square connection profile provides for four alternative orientations between the first and second elements.

Optionally, the connection profile is a hexagon.

A hexagonal connection profile provides for six alternative orientations between the first and second elements. An increased quantity of alternative joint assembly orientations provides a user with a simpler assembly procedure thus making the coupling of the present invention more convenient for the user.

Optionally, the connection profile is an octagon.

An octagonal connection profile provides for eight alternative orientations between the first and second elements.

Optionally, each of the annular projection and annular recess comprises:
an end surface;
a first angled side surface; and
a second angled side surface,
the first side surface and the second side surface being disposed respectively on a radially innermost edge and a radially outermost edge of the end surface.

The arrangement of end surface flanked by first and second angled side surfaces makes the coupling simple to align during assembly and therefore convenient for a user.

Furthermore the arrangement of end surface and flanking angled side surfaces makes the coupling insensitive to imperfections and small degrees of debris. This makes the coupling simpler and therefore easier to use.

Optionally, at least one of the first side surface and the second side surface of one of the annular projection and the annular recess has a convex profile, and at least one of the first side surface and the second side surface of the other of the annular projection and the annular recess has either a convex profile or a planar profile.

By providing at least one of the side surfaces with a convex surface profile it is possible to ensure that, when the side surfaces are brought into contact with one another, the contact area is conformal in nature. This ensures that any minor imperfections in the surface profile of the side surfaces do not adversely influence the contact between adjoining surfaces.

Optionally, each of the first side surface and the second side surface has a convex profile.

Optionally, the end surface comprises at least one hole therethrough, the or each hole being adapted to receive a fastener.

While the coupling employs the connection profile to transmit torque from the first element to the second element (i.e. across the the coupling) it remains necessary to use at least one fastener to secure the first and second elements to one another to thereby prevent inadvertent disassembly of the coupling.

According to a second aspect of the present invention there is provided a gas turbine engine comprising a coupling according to the first aspect of the invention.

Other aspects of the invention provide devices, methods and systems which include and/or implement some or all of the actions described herein. The illustrative aspects of the invention are designed to solve one or more of the problems herein described and/or one or more other problems not discussed.

### Brief Description of the Drawings

There now follows a description of an embodiment of the invention, by way of nonlimiting example, with reference being made to the accompanying drawings in which:
Figure 1 shows a perspective view of a female element of a conventional conic coupling;
Figure 2 shows a partial axial cross-sectional view of the coupling of Figure 1;
Figure 3 shows a further partial axial cross-sectional view of the coupling of Figure 1 showing a means of clamping the elements of the coupling together;
Figure 4 shows a cross-sectional view of a gas turbine engine employing the coupling of the present invention;
Figure 5 shows an axial cross-sectional view of a conic coupling according to the present invention;
Figure 6 shows a radial cross-sectional view of the coupling of Figure 4 according to a first embodiment of the invention;
Figure 7 shows a radial cross-sectional view of the coupling of Figure 4 according to a second embodiment of the invention; and
Figure 8 shows a radial cross-sectional view of the coupling of Figure 4 according to a third embodiment of the invention.

It is noted that the drawings may not be to scale. The drawings are intended to depict only typical aspects of the invention, and therefore should not be considered as limiting the scope of the invention. In the drawings, like numbering represents like elements between the drawings.

### Detailed Description

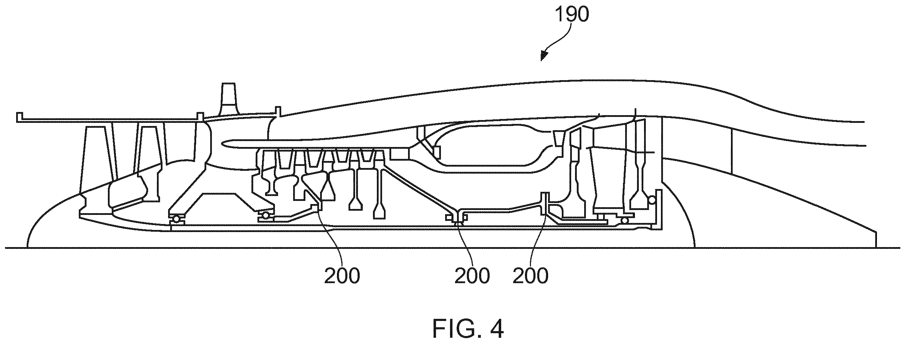

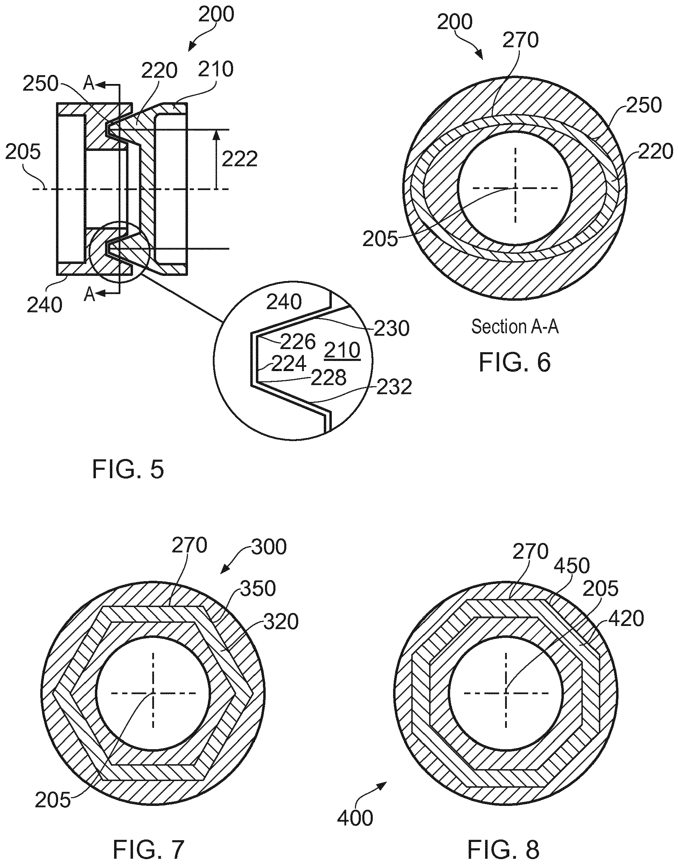

Referring to Figures 5 and 6, a coupling according to a first embodiment of the invention is designated generally by the reference numeral 200. As shown in Figure 4, the coupling 200 forms part of a gas turbine engine 190 and is employed to couple rotating shafts together.

The coupling 200 comprises a first element 210 and a second element 240, each of the first and second elements 210,240 having a common axis 205.

The first element 210 has an annular projection 220 arranged around the axis 205. The second element 240 has an annular recess 250 also arranged around the axis. The annular projection is removably accommodated within the annular recess as indicated in Figure 5.

A radius 222 of the annular projection 220 varies circumferentially around the axis 205 to thereby define a connection profile 270. Since the annular projection 220 is accommodated within the annular recess 250, it follows that a corresponding radius (not shown) of the annular recess 250 also varies circumferentially around the axis to define the same connection profile 270.

In the present embodiment the connection profile 270 takes the form of an ellipse. In other embodiments of the invention the connection profile may take another geometric form.

In the present embodiment, the first element 210 and the second element 240 are formed from a titanium alloy. Alternatively, the first and second elements 210,240 may be formed from another metal or metal alloy. In a further alternative arrangement, the first and second elements 210,240 may be formed from a fibre reinforced composite material.

The annular projection 220 has an end surface 224 having a radially innermost edge 226 and a radially outermost edge 228. A first angled side surface 230 extends from the radially innermost edge 226, and a second angled side surface 232 extends from the radially outermost edge 228. The arrangement of end surface 224 and angled side surfaces 230,232 forms a truncated pyramidal cross-section to the annular projection 220.

As mentioned above the annular projection 220 is removably accommodated within the annular recess 250. Consequently, the annular recess 250 has a corresponding female arrangement of end surface and angled side surface features to the male features of the annular projection 220.

In this arrangement, a least one of the first angled side surface 230 and the second side surface 232 of one of the annular projection 220 and the annular recess 250 has a convex profile. Additionally, at least one of the first angled side surface 230 and the second angled side surface 232 of the other of the annular projection 220 and the annular recess 250 has either a convex profile or a planar profile.

The end surface 224 of the annular projection 220 comprises a radially symmetrical array of holes (not shown) therethrough, each of which accommodates a fastener (not shown) to secure the first element 220 to the second element 240. The array of holes is arranged symmetrically around the axis 205. In an alternative arrangement, the array of holes may be arranged asymmetrically around the axis 205.

Referring to Figure 7, a coupling according to a second embodiment of the invention is designated generally by the reference numeral 300. Features of the coupling 300 which correspond to those of coupling 200 have been given corresponding reference numerals for ease of reference.

The coupling 300 has a first element 310 and a second element 340. The first element 310 has an annular projection 320 while the second element 340 has a corresponding annular recess 350.

In the same manner as that described above for the first embodiment, the annular projection 320 is removably accommodated within the annular recess 350. A radius 322 of the annular projection 320 varies circumferentially around the axis 205 to thereby define a connection profile 370. In this embodiment the connection profile 370 is a hexagon.

The profile features of the annular projection 320 correspond to those described above for the annular projection 220 of the first embodiment.

Referring to Figure 8, a coupling according to a third embodiment of the invention is designated generally by the reference numeral 400. Features of the coupling 400 which correspond to those of coupling 200 have been given corresponding reference numerals for ease of reference.

The coupling 400 has a first element 410 and a second element 440. The first element 410 has an annular projection 420 while the second element 440 has a corresponding annular recess 450.

In the same manner as that described above for the first and second embodiments, the annular projection 420 is removably accommodated within the annular recess 350. A radius 422 of the annular projection 420 varies circumferentially around the axis 205 to thereby define a connection profile 470. In this embodiment the connection profile 470 is an octagon.

The profile features of the annular projection 420 correspond to those described above for the annular projection 220 of the first embodiment.

The foregoing description of various aspects of the invention has been presented for purposes of illustration and description. It is not intended to be exhaustive or to limit the invention to the precise form disclosed, and obviously, many modifications and variations are possible. Such modifications and variations that may be apparent to a person of skill in the art are included within the scope of the invention as defined by the accompanying claims.

## Claims

1. A coupling (200,300,400) comprising:
a first element (210,310,410); and
a second element (240,340,440);
whereby the first element (210,310,410) and the second element (240,340,440) have a common axis (205), the first element (210,310,410) having an annular projection (220,320,420) arranged around the axis (205), the second element (240,340,440) having an annular recess (250,350,450) arranged around the axis (205), the annular projection (220,320,420) being removably accommodated within the annular recess (250,350,450), and
wherein a radius (222) of the annular projection (220,320,420) varies circumferentially around the axis (205) to thereby define a connection profile (270).

2. The coupling (200,300,400) as claimed in Claim 1, wherein the connection profile (270) is an ellipse.

3. The coupling (200,300,400) as claimed in Claim 1, wherein the connection profile (270) is a square.

4. The coupling (200,300,400) as claimed in Claim 1, wherein the connection profile (270) is a hexagon.

5. The coupling (200,300,400) as claimed in Claim 1, wherein the connection profile (270) is an octagon.

6. The coupling (200,300,400) as claimed in any one of Claims 1 to 5, wherein each of the annular projection (220,320,420) and annular recess (250,350,450) comprises:
an end surface (224);
a first angled side surface (230); and
a second angled side surface (232),
the first side surface (230) and the second side surface (232) being disposed respectively on a radially innermost edge (226) and a radially outermost edge (228) of the end surface (224).

7. The coupling (200,300,400) as claimed in Claim 6, wherein at least one of the first side surface (230) and the second side surface (232) of one of the annular projection (220,320,420) and the annular recess (250,350,450) has a convex profile, and at least one of the first side surface and the second side surface of the other of the annular projection (220,320,420) and the annular recess (250,350,450) has either a convex profile or a planar profile.

8. The coupling (200,300,400) as claimed in Claim 6 or Claim 7, wherein each of the first side surface (230) and the second side surface (232) has a convex profile.

9. The coupling (200,300,400) as claimed in any one of Claims 6 to 8, wherein the end surface (224) comprises at least one hole therethrough, the or each hole being adapted to receive a fastener.

10. A gas turbine engine comprising a coupling (200,300,400) as claimed in any one of Claims 1 to 9.

## Patentansprüche

1. Kupplung (200, 300, 400), aufweisend:
ein erstes Element (210, 310, 410); und
ein zweites Element (240, 340, 440);
wobei das erste Element (210, 310, 410) und das zweite Element (240, 340, 440) eine gemeinsame Achse haben (205), das erste Element (210, 310, 410) einen ringförmigen Vorsprung (220, 320, 420) hat, der um die Achse (205) angeordnet ist, das zweite Element (240, 340, 440) eine ringförmige Ausnehmung (250, 350, 450) hat, die um die Achse (205) angeordnet ist, wobei der ringförmige Vorsprung (220, 320, 420) entfernbar in der ringförmigen Ausnehmung (250, 350, 450) aufgenommen ist, und
wobei ein Radius (222) des ringförmigen Vorsprungs (220, 320, 420) sich in Umfangsrichtung um die Achse (205) ändert, um dadurch ein Verbindungsprofil (270) zu definieren.

2. Kupplung (200, 300, 400) nach Anspruch 1, wobei das Verbindungsprofil (270) eine Ellipse ist.

3. Kupplung (200, 300, 400) nach Anspruch 1, wobei das Verbindungsprofil (270) ein Quadrat ist.

4. Kupplung (200, 300, 400) nach Anspruch 1, wobei das Verbindungsprofil (270) ein Hexagon ist.

5. Kupplung (200, 300, 400) nach Anspruch 1, wobei das Verbindungsprofil (270) ein Oktagon ist.

6. Kupplung (200, 300, 400) nach einem der Ansprüche 1 bis 5, wobei sowohl der ringförmige Vorsprung (220, 320, 420) als auch die ringförmige Ausnehmung (250, 350, 450) jeweils aufweisen:
eine Endfläche (224);
eine erste schräge Seitenfläche (230); und
eine zweite schräge Seitenfläche (232),
wobei die erste Seitenfläche (230) und die zweite Seitenfläche (232) jeweils auf einer radial innersten Kante (226) und einer radial äußersten Kante (228) der Endfläche (224) angeordnet sind.

7. Kupplung (200, 300, 400) nach Anspruch 6, wobei mindestens eine der ersten Seitenfläche (230) und der zweiten Seitenfläche (232) von einem des ringförmigen Vorsprungs (220, 320, 420) und der ringförmigen Ausnehmung (250, 350, 450) ein konvexes Profil hat, und mindestens eine der ersten Seitenfläche und der zweiten Seitenfläche von dem anderen des ringförmigen Vorsprungs (220, 320, 420) und der ringförmigen Ausnehmung (250, 350, 450) entweder ein konvexes Profil oder ein planares Profil hat.

8. Kupplung (200, 300, 400) nach Anspruch 6 oder Anspruch 7, wobei jede der ersten Seitenfläche (230) und der zweiten Seitenfläche (232) ein konvexes Profil hat.

9. Kupplung (200, 300, 400) nach einem der Ansprüche 6 bis 8, wobei die Endfläche (224) mindestens ein Loch durch sie aufweist, wobei das oder jedes Loch angepasst ist, um ein Befestigungselement aufzunehmen.

10. Gasturbinenmotor, aufweisend eine Kupplung (200, 300, 400) nach einem der Ansprüche 1 bis 9.

## Revendications

1. Raccord (200, 300, 400) comprenant :
un premier élément (210, 310, 410) ; et
un second élément (240, 340, 440) ;
ledit premier élément (210, 310, 410) et ledit second élément (240, 340, 440) possédant un axe commun (205), ledit premier élément (210,310,410) possédant une saillie annulaire (220, 320, 420) disposée autour de l'axe (205), ledit second élément (240, 340, 440) possédant un évidement annulaire (250,350,450) disposé autour de l'axe (205), la saillie annulaire (220, 320, 420) étant reçue de manière amovible dans l'évidement annulaire (250, 350, 450), et
un rayon (222) de la saillie annulaire (220, 320, 420) variant circonférentiellement autour de l'axe (205) pour ainsi définir un profil de liaison (270).

2. Raccord (200, 300, 400) selon la revendication 1, ledit profil de liaison (270) étant une ellipse.

3. Raccord (200, 300, 400) selon la revendication 1, ledit profil de liaison (270) étant un carré.

4. Raccord (200, 300, 400) selon la revendication 1, ledit profil de liaison (270) étant un hexagone.

5. Raccord (200, 300, 400) selon la revendication 1, ledit profil de liaison (270) étant un octogone.

6. Raccord (200, 300, 400) selon l'une quelconque des revendications 1 à 5, chacun de la saillie annulaire (220, 320, 420) et de l'évidement annulaire (250, 350, 450) comprenant :
une surface d'extrémité (224) ;
une première surface latérale inclinée (230) ; et
une seconde surface latérale inclinée (232),
la première surface latérale (230) et la seconde surface latérale (232) étant disposées respectivement sur un bord le plus intérieur radialement (226) et un bord le plus extérieur radialement (228) de la surface d'extrémité (224).

7. Raccord (200, 300, 400) selon la revendication 6, au moins l'une de la première surface latérale (230) et de la seconde surface latérale (232) de l'un de la saillie annulaire (220, 320, 420) et de l'évidement annulaire (250, 350, 450) possédant un profil convexe, et au moins l'une de la première surface latérale et de la seconde surface latérale de l'autre de la saillie annulaire (220, 320, 420) et de l'évidement annulaire (250, 350, 450) possédant soit un profil convexe soit un profil plan.

8. Raccord (200, 300, 400) selon la revendication 6 ou 7, chacune de la première surface latérale (230) et de la seconde surface latérale (232) possédant un profil convexe.

9. Raccord (200, 300, 400) selon l'une quelconque des revendications 6 à 8, ladite surface d'extrémité (224) comprenant au moins un trou à travers celle-ci, le trou ou chaque trou étant adapté pour recevoir un élément de fixation.

10. Moteur à turbine à gaz comprenant un raccord (200, 300, 400) selon l'une quelconque des revendications 1 à 9.
